# EUROPEAN PATENT APPLICATION

(11) **EP 4 485 826 A1**
(43) Date of publication of application: **01.01.2025**
(21) Application number: 24185046.0
(22) Date of filing: 27.06.2024
(51) Int. Cl.: H04L 1/00, H04L 1/16, H04W 52/00, H04W 84/12

(54) **WIFI COMMUNICATION METHOD AND CIRCUIT**

(30) Priority: 27.06.2023 US 202363510375 P
(71) Applicant: MediaTek Inc., 30078 Hsinchu City (TW)
(72) Inventor: HWANG, Ding-Yuh, 30078 Hsinchu City (TW); HSU, Wei-Hsiu, 30078 Hsinchu City (TW); LIN, Jun-Wei, 30078 Hsinchu City (TW); DING, Zih-Yin, 30078 Hsinchu City (TW); CHANG, Chia-Ning, 30078 Hsinchu City (TW); HUANG, Chao-Wei, 30078 Hsinchu City (TW)
(74) Representative: Hoefer & Partner Patentanwälte mbB

(57) **Abstract**

A Wi-Fi communication method includes: after a predetermined idle period, switching from a first mode into a second mode, wherein the first mode having a first capability, and the second mode having a second capability different from the first capability; in response to failure of decoding a first data packet, switching from the second mode into the first mode; and receiving and decoding a second data packet in the first mode, wherein the first data packet is retransmitted as the second data packet.

## Description

### TECHNICAL FIELD

The disclosure relates in general to a Wi-Fi communication method and circuit.

### BACKGROUND

As for Wi-Fi functionality in Wi-Fi devices (for example but not limited by, smartphones, routers), Rx Listen (Receive Listen) is a state where the Wi-Fi device is listening (or waiting) for incoming data packets but not actively transmitting any data. This is a low-power state used to conserve energy.

"Rx Listen" is a crucial scenario for managing Wi-Fi DoU (daily of use) on smartphones. In usual, as for the power consumption ratio, STA spend 47% power consumption in Rx listening, 27% in active receiving, 25% in active transmitting and 1% in power saving mode.

Wi-Fi hotspots allow other devices (referred to as Stations or STAs) to connect to the internet through its cellular connection. AP (Access Point) is a device that provides wireless connectivity to stations within the network. It serves as the central hub for communication in a Wi-Fi network. STA (Station) refers to any device that connects to the wireless network provided by the AP, such as laptops, smartphones, tablets, etc.

Where no devices (STAs) are connected to the Wi-Fi hotspot, or if all connected devices are in Power Save (PS) mode, the smartphone's Wi-Fi will spend almost 99% of the time in the "Rx Listen" state. This helps in conserving battery life since the phone is not actively transmitting data but is ready to receive any connection requests or data transmissions.

Power Save (PS) mode is a state where the connected devices reduce their power consumption by limiting their activity or entering a low-power state when not actively using the network.

Thus, how to reduce Rx listening power consumption is desired.

### SUMMARY

According to one embodiment, a Wi-Fi communication method of a transceiver device is provided. The Wi-Fi communication method comprises: after a predetermined idle period, switching from a first mode into a second mode, wherein the first mode having a first capability, and the second mode having a second capability different from the first capability; in response to failure of decoding a first data packet, switching from the second mode into the first mode; and receiving and decoding a second data packet in the first mode, wherein the first data packet is retransmitted as the second data packet.

According to another embodiment, a Wi-Fi communication method for a Wi-Fi communication circuit is provided. The Wi-Fi communication method comprises: entering into a second mode from a first mode at least based on a transmission requirement being lower than a transmission requirement threshold, and based on an idle period being longer than an idle period threshold, the first mode having a first capability, and the second mode having a second capability different from the first capability; and exiting the second mode based on a decoding result of a received data packet.

According to an alternative embodiment, a Wi-Fi communication circuit is provided. The Wi-Fi communication circuit comprises: an ALPL (advanced low power listen) control circuit; and a Wi-Fi processing circuit coupled to the ALPL control circuit. The ALPL control circuit is configured for: after a predetermined idle period, switching the Wi-Fi communication circuit from a first mode into a second mode, wherein the first mode having a first capability, and the second mode having a second capability different from the first capability; in response to failure of decoding a first data packet, switching the Wi-Fi communication circuit from the second mode into the first mode; and receiving and decoding a second data packet in the first mode, wherein the first data packet is retransmitted as the second data packet.

### BRIEF DESCRIPTION OF THE DRAWINGS

Fig. 1 shows power gain evaluation according to one embodiment of the application.
Fig. 2A and Fig. 2B show system behavior of ALPL (advanced low power listen) operations of a Wi-Fi communication circuit according to one embodiment of the application.
Fig. 3 shows how much time needed for ALPL mode switch according to one embodiment of the application.
Fig. 4 shows ALPL definition according to one embodiment of the application.
Fig. 5A and Fig. 5B show a Wi-Fi communication method according to one embodiment of the application.
Fig. 6 shows a local oscillator shift for bandwidth switch according to one embodiment of the application.
Fig. 7 shows a functional block diagram of the Wi-Fi communication circuit according to one embodiment of the application.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### DESCRIPTION OF THE EMBODIMENTS

Technical terms of the disclosure are based on general definition in the technical field of the disclosure. If the disclosure describes or explains one or some terms, definition of the terms is based on the description or explanation of the disclosure. Each of the disclosed embodiments has one or more technical features. In possible implementation, one skilled person in the art would selectively implement part or all technical features of any embodiment of the disclosure or selectively combine part or all technical features of the embodiments of the disclosure.

One embodiment of the application discloses an ALPL (advanced low power listen) mode having lower power consumption than normal listen mode, to reduce power consumption in receiving listen. One embodiment of the application is applied in for example but not limited by, a transceiver device.

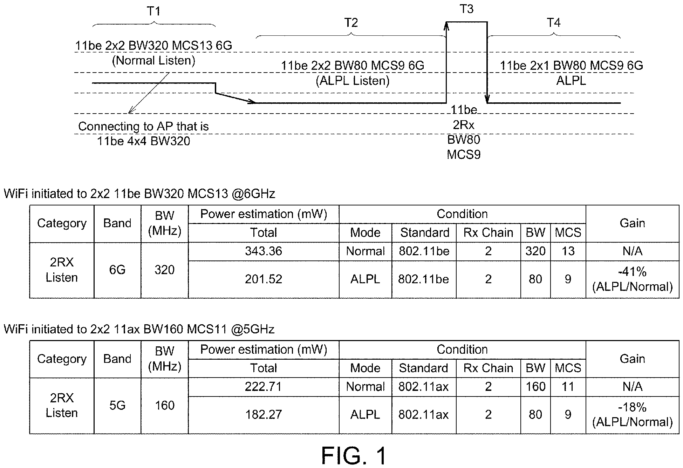

Fig. 1 shows power gain evaluation according to one embodiment of the application.

As shown in Fig. 1, at timing T1, when the Wi-Fi device having a Wi-Fi communication circuit is connected to an AP (access point) device that is IEEE 802.11 be 4*4 BW320 (bandwidth 320 which means 320 MHz), in idle duration, the Wi-Fi communication circuit is under normal listen mode which is for example but not limited by, IEEE 802.11 be 2*2 BW320 MCS13 (Modulation and Coding Scheme 13) 6G.

After a predetermined idle period, at timing T2, the Wi-Fi communication circuit switches from the normal listen mode into the ALPL (advanced low power listen) mode which is for example but not limited by, IEEE 802.11be 2*2 BW80 MCS9 6G. It is clear than the Wi-Fi communication circuit has lower power consumption under the ALPL listen more than the normal listen mode.

At timing T3, the Wi-Fi communication circuit transmits a beacon packet under the ALPL mode.

At timing T4, the Wi-Fi communication circuit remains at the ALPL mode which is for example but not limited by, IEEE 802.11be 2*1 BW80 MCS9 6G.

Two tables in Fig. 1 show power consumption comparison between the normal listen mode and the ALPL mode. For example, in 2Rx listen, when the band is 6G, power consumption in the normal listen mode is 343.36 while power consumption in the ALPL mode is 201.52. Thus, the ALPL mode has power consumption is -41% compared with the normal listen mode. In the tables, 11ax refers to IEEE 802.11 ax.

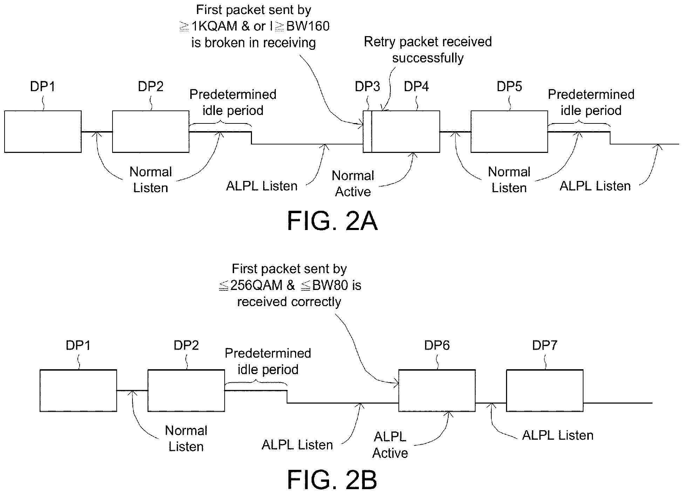

Fig. 2A and Fig. 2B show system behavior of ALPL (advanced low power listen) operations of a Wi-Fi communication circuit according to one embodiment of the application.

Refer to Fig. 2A. The Wi-Fi communication circuit (i.e. a Wi-Fi communication chip) according to one embodiment of the application receives data packet DP1 which is for example but not limited by heavy traffic. Then, the Wi-Fi communication circuit enters a normal listen mode.

Then, the Wi-Fi communication circuit receives data packet DP2 which is for example but not limited by low traffic. Then, the Wi-Fi communication circuit enters the normal listen mode.

After a predetermined idle period, the Wi-Fi communication circuit switches from the normal listen mode into the ALPL listen mode, where the Wi-Fi communication circuit has lower power consumption under the ALPL listen more than the normal listen mode.

In the ALPL listen mode, when the received data packet DP3 is sent in a high capability, the Wi-Fi communication circuit does not decode or receive the high capability data packet correctly. In here, the high capability indicates for example but not limited by, high bandwidth (BW 320 (which means 320 MHz) or higher) and/or high modulation rate (MCS-11 or higher) and/or high physical layer (PYH) data rate (1K QAM (Quadrature Amplitude Modulation) or higher). That is to say, if the data packet is sent in high capability which exceeds the receiving capability in the ALPL mode, then the Wi-Fi communication circuit does not decode or receive the high capability data packet correctly. The Wi-Fi communication circuit decodes packet header of the received data packet to identify the bandwidth, the modulation rate and the PYH data rate of the received data packet to determine whether the Wi-Fi communication circuit in the ALPL mode can decode the data packet correctly or not.

Because the Wi-Fi communication circuit cannot decode or receive the high capability data packet DP3 correctly, the Wi-Fi communication circuit does not send acknowledge packets to the AP and thus the AP retransmits the high capability data packet DP4. In response that the Wi-Fi communication circuit does not decode or receive the high capability data packet correctly (i.e. failure of data packet decoding), the Wi-Fi communication circuit switches from the ALPL mode into the normal active mode. After entering into the normal active mode, the Wi-Fi communication circuit correctly receives and decodes the high capability data packet DP4 which is retransmitted or retried. Then the Wi-Fi communication circuit enters into the normal listen mode again.

Then, the Wi-Fi communication circuit receives data packet DP5 and enters into the ALPL mode after the predetermined idle period.

Further, in Fig. 2A, before receiving the data packet DP1, when another data packet is correctly decoded and received, the transceiver device according to one embodiment of the application stays in the ALPL mode.

Refer to Fig. 2B. In Fig. 2B, after entering into the ALPL listen mode, when the received data packet DP6 is sent in or under a low capability, the Wi-Fi communication circuit decodes or receives the low capability data packet DP6 correctly in the ALPL active mode. In here, the low capability indicates for example but not limited by, low bandwidth (BW 80 (which means 80 MHz) or higher) and/or low modulation rate (MCS-9 or lower) and/or low physical layer (PYH) data rate (256QAM or lower). That is to say, if the data packet is sent in low capability which is within the receiving capability in the ALPL mode, then the Wi-Fi communication circuit will decode or receive the low capability data packet DP6 correctly and thus the Wi-Fi communication circuit stays in the ALPL mode.

Then, the Wi-Fi communication circuit receives low capability data packet DP7.

That is to say, in the ALPL mode when the Wi-Fi communication circuit receives the data packet which is sent beyond the receiving capability, the Wi-Fi communication circuit switches from the ALPL mode to the normal mode; and in the ALPL mode when the Wi-Fi communication circuit receives the data packet which is sent within the receiving capability, the Wi-Fi communication circuit remain in the ALPL mode. In the following, the normal mode indicates the normal listen mode and the normal active mode while the ALPL mode indicates the ALPL listen mode and the ALPL active mode.

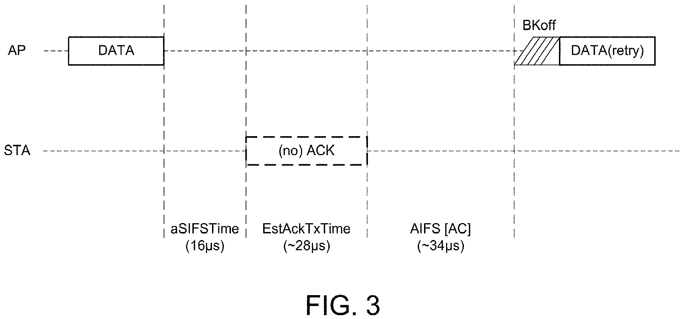

Fig. 3 shows how much time needed for ALPL mode switch according to one embodiment of the application. Fig. 3 is scenario dependent. As shown in Fig. 3, if the data packet is sent by a high modulation rate (≧ MCS11) and high bandwidth (≧BW160), then data packet receiving would be failed in the ALPL mode. The time between previous receiving-failed data packet and retransmitted data packet could have about ~78us (max) from protocol point of view. The retransmitted (or said, retried) data packet shall be received correctly by the Wi-Fi communication circuit as only as that operation mode switching (from the ALPL mode into the normal mode) is done in 50us.

In Fig. 3, the minimum time required for operation mode switching to correctly receive the retransmitted data packet is: AIFS[AC]= AIFSN[AC] x aSlotTime + aSIFSTime = 2 x 9us + 16us = 34us (shortest), wherein AIFS refers to "Arbitration Interframe space", "SlotTime" refers to a slot time and "SIFSTime" refers to Short Interframe Space time. AIFSN[AC] includes 7 (BK), 3 (BE), 2 (VI), 2 (VO). "aSlotTime" is 9us and "aSIFSTime" is 16us under 5GHz.

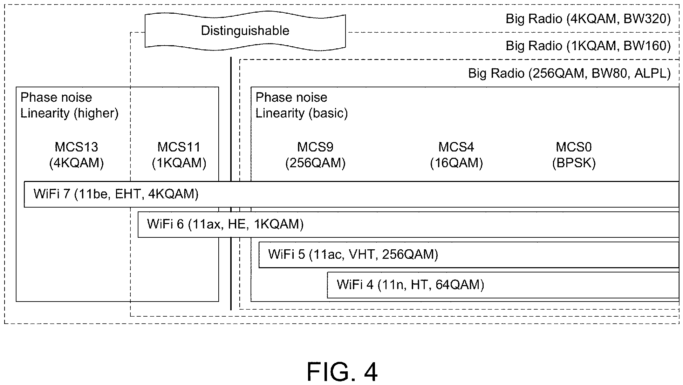

Fig. 4 shows ALPL definition according to one embodiment of the application. ALPL relates to 256QAM and BW80, which is compatible with Wi-Fi 5 (having basic phase noise linearity). Also, Wi-Fi 7 relates to 4KQAM (MCS13) and BE320 (having higher phase noise linearity). Others are so on.

That is, in one embodiment of the application, in ALPL mode, the modulation rate is lower than or equal to 256QAM, which reduces power consumption from synthesizer that needs settling time shorter than 40us.

Also, in one embodiment of the application, in ALPL mode, the bandwidth is lower than or equal to BW80 (80MHz), which reduces power consumption from low noise amplifier (LNA), transimpedance amplifier (TZ), low pass filter, RSSI (received signal strength indicator) ADC (analog-to-digital converter), analog front end (AFE), that need settling time shorter than 3us.

In the following, a first mode is for example but not limited by, the normal mode which having a first capability; and a second mode is for example but not limited by, the ALPL mode which having a second capability lower than the first capability. The first capability indicates for example but not limited by, a bandwidth 160MHz (BW160) or higher, and/or a modulation rate MCS11 or higher, and/or a PYH data rate 1KQAM or higher. The second capability indicates for example but not limited by, a bandwidth 80MHz (BW80), and/or a modulation rate MCS9, and/or a PYH data rate 256QAM.

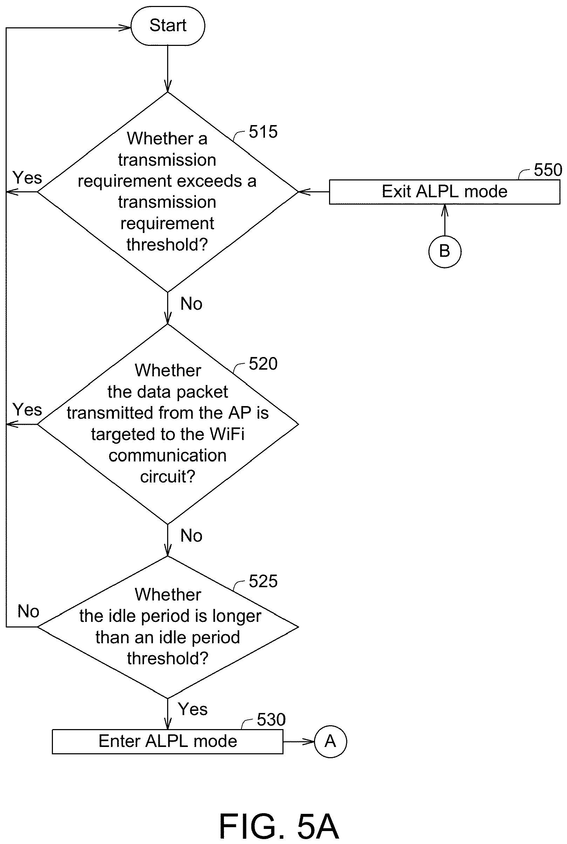

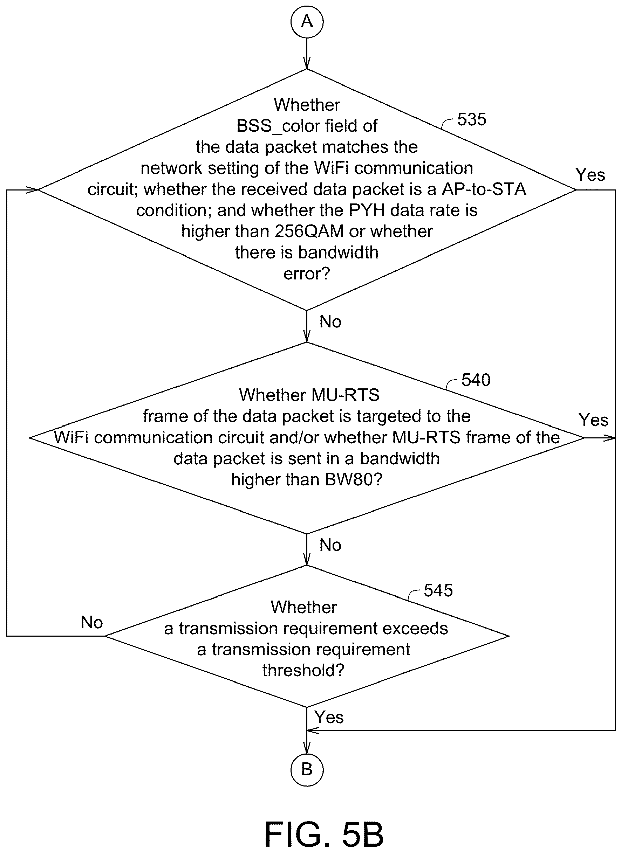

Fig. 5A and Fig. 5B show a Wi-Fi communication method according to one embodiment of the application. Wi-Fi configuration of the Wi-Fi communication circuit is set to a second capability (256QAM and BW80).

ALPL is initialized and enabled. For example, the ALPL feature setting is configured as: PHY data rate lower than 256QAM and bandwidth lower than 80MHz. After entering the ALPL mode, Wi-Fi power consumption is saved.

In step 515, whether a transmission requirement of the Wi-Fi communication circuit exceeds a transmission requirement threshold is determined. The transmission requirement threshold of the Wi-Fi communication circuit is for example but not limited by, 256QAM and/or BW80 (i.e. the second capability). When the transmission requirement of the Wi-Fi communication circuit does not exceed the transmission requirement threshold (i.e. when the transmission requirement of the Wi-Fi communication circuit exceeds neither 256QAM nor BW80) (when the step 515 is no), the flow proceeds to step 520. When the transmission requirement of the Wi-Fi communication circuit exceeds the transmission requirement threshold (i.e. when the transmission requirement of the Wi-Fi communication circuit exceeds either 256QAM or BW80) (when the step 515 is yes), the flow returns to start (i.e. the Wi-Fi communication circuit in the normal mode).

In step 520, whether the data packet transmitted from the AP (a packet source) is targeted to the Wi-Fi communication circuit is determined. When step 520 is no (which means the data packet transmitted from the AP is not targeted to the Wi-Fi communication circuit), the flow proceeds to step 525. When step 520 is yes (which means the data packet transmitted from the AP is targeted to the Wi-Fi communication circuit), the flow returns to start (i.e. the Wi-Fi communication circuit in the normal mode).

In step 525, whether the idle period is longer than an idle period threshold (for example but not limited by 10ms) or not is determined. When step 525 is yes, the flow proceeds to step 530. When step 525 is no, the flow returns to start (i.e. the Wi-Fi communication circuit in the normal mode).

In step 530, the Wi-Fi communication circuit enters into the ALPL mode.

In step 535, by decoding the receiving data packets, the Wi-Fi communication circuit determines whether BSS_color field (BSS_color being a number between 0 and 63, BSS referring to "Basic Service Set") of the data packet matches the network setting of the Wi-Fi communication circuit; whether the received data packet is a AP-to-STA condition by checking the AP-STA flag; and whether the PYH data rate is higher than 256QAM or whether there is bandwidth error.

When BSS_color field of the data packet matches the network setting of the Wi-Fi communication circuit, the Wi-Fi communication circuit has to process the received data packet. When BSS_color field of the data packet does not matches the network setting of the Wi-Fi communication circuit, the Wi-Fi communication circuit can make smart decisions about whether to delay transmission or proceed, based on the signal strength and the level of interference.

In step 535, when the Wi-Fi communication circuit determines that BSS_color field of the data packet matches the network setting of the Wi-Fi communication circuit, the flow proceeds to the step 550 to exit the ALPL mode.

In step 535, when the Wi-Fi communication circuit determines that the received data packet is a AP-to-STA condition by checking the AP-STA flag, the flow proceeds to the step 550 to exit the ALPL mode.

In step 535, when the Wi-Fi communication circuit determines that either the PYH data rate is higher than 256QAM or there is bandwidth error, the flow proceeds to the step 550 to exit the ALPL mode.

That is to say, In step 535, (1) when the Wi-Fi communication circuit determines that BSS_color field of the data packet does not match the network setting of the Wi-Fi communication circuit, and (2) when the Wi-Fi communication circuit determines that the received data packet is not a AP-to-STA condition, and (3) when the Wi-Fi communication circuit determines that neither the PYH data rate is higher than 256QAM nor there is bandwidth error, the flow proceeds to the step 540.

Step 535 is to leverage data packet retransmission mechanism. In the following, step 535 may be summarized as "decoding a received data packet to determine whether to exit the ALPL mode based on a decoding result", wherein the decoding result includes: whether BSS_color field of the data packet matches the network setting of the Wi-Fi communication circuit; whether the received data packet is a AP-to-STA condition by checking the AP-STA flag; and whether the PYH data rate is higher than 256QAM or whether there is bandwidth error.

In step 540, the Wi-Fi communication circuit determines whether MU-RTS (Multi-User Request to Send) frame of the data packet is targeted to the Wi-Fi communication circuit (i.e. whether the received data packet is targeted to the Wi-Fi communication circuit) and/or the Wi-Fi communication circuit determines whether MU-RTS frame of the data packet is sent in a bandwidth higher than BW80 (i.e. the second capability).

In step 540, when (1) the Wi-Fi communication circuit determines that MU-RTS frame of the data packet is targeted to the Wi-Fi communication circuit or (2) the Wi-Fi communication circuit determines that MU-RTS frame of the data packet is sent in a bandwidth higher than BW80, the flow proceeds to the step 550 to exit the ALPL mode.

In step 540, when (1) the Wi-Fi communication circuit determines that MU-RTS frame of the data packet is not targeted to the Wi-Fi communication circuit and (2) the Wi-Fi communication circuit determines that MU-RTS frame of the data packet is sent in a bandwidth lower than BW80, the flow proceeds to the step 545.

Step 540 is to leverage RTS packet retransmission mechanism.

In step 545, whether a transmission requirement of the Wi-Fi communication circuit exceeds a transmission requirement threshold is determined. Step 545 is the same or similar to step 515 and thus details of step 545 are omitted here. When the transmission requirement of the Wi-Fi communication circuit does not exceed the transmission requirement threshold (i.e. when the transmission requirement of the Wi-Fi communication circuit exceeds neither 256QAM nor BW80) (when the step 545 is no), the flow returns to step 535. When the transmission requirement of the Wi-Fi communication circuit exceeds the transmission requirement threshold (i.e. when the transmission requirement of the Wi-Fi communication circuit exceeds either 256QAM or BW80) (when the step 545 is yes), the flow proceeds to step 550 to exit the ALPL mode.

In step 550, the Wi-Fi communication circuit determines to exit the ALPL mode. That is, when any of the steps 535, 540 and 545 is yes, the Wi-Fi communication circuit determines to exit the ALPL mode. When all the steps 535, 540 and 545 is no, the Wi-Fi communication circuit stays in the ALPL mode.

Further, after the step 550, the ALPL mode is disabled. For example but not limited by, the ALPL mode is disabled by software.

Steps 515-550 are performed by hardware.

Also, sequences of the steps 515, 520 and 525 are not limited by Fig. 5. In other possible embodiments of the application, the steps 515, 520 and 525 may be executed in different sequences, which is still within the spirit and the scope of the application.

Also, sequences of the steps 535, 540 and 555 are not limited by Fig. 5. In other possible embodiments of the application, the steps 535, 540 and 555 may be executed in different sequences, which is still within the spirit and the scope of the application.

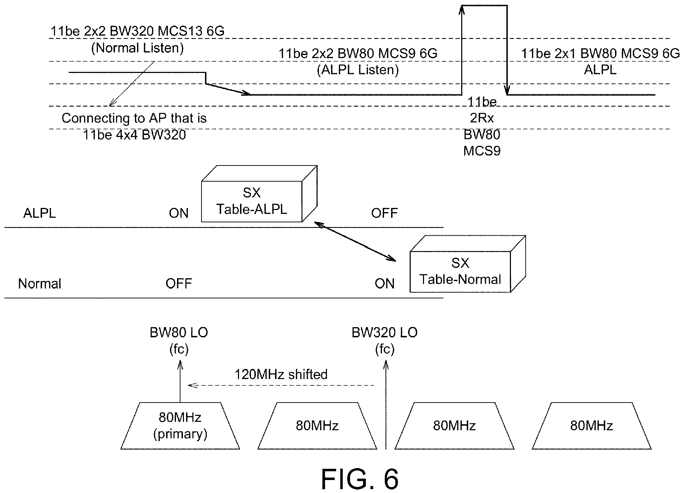

Fig. 6 shows a local oscillator shift for bandwidth switch according to one embodiment of the application. In the ALPL mode, the sx-table-ALPL is ON while the sx-table-normal is OFF, wherein "sx" refers to synthesizer; and in the normal mode, the sx-table-ALPL is OFF while the sx-table-normal is ON. The sx-table-normal includes setting (for example but not limited by MCS 13 (4KQAM)) needed in the normal mode while the sx-table-ALPL includes setting (for example but not limited by MCS 9 (256QAM)) needed in the ALPL mode. Fig. 6 also shows that when switching from the normal mode to the ALPL mode, central frequency (fc) of the LO (local oscillator) used in BW320 is shifted to the central frequency (fc) of the LO used in BW80. LO shift may be for example but not limited by 120MHz.

Further, any of Fig. 1 to Fig. 6 of the application may be combined, which is still within the spirit and the scope of the application.

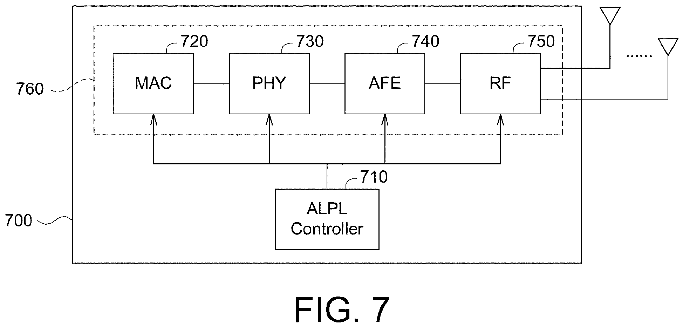

Fig. 7 shows a functional block diagram of the Wi-Fi communication circuit according to one embodiment of the application. The Wi-Fi communication circuit 700 according to one embodiment of the application includes an ALPL control circuit 710, a MAC (Media Access Control) circuit 720, a PHY (Physical) layer circuit 730, an AFE (Analog Front End) circuit 740 and an RF (Radio Frequency) circuit 750. The MAC circuit 720, the PHY layer circuit 730, the AFE circuit 740 and the RF circuit 750 may be also referred as a Wi-Fi processing circuit 760.

The ALPL control circuit 710 is coupled to the MAC circuit 720, the PHY layer circuit 730, the AFE circuit 740 and the RF circuit 750. The ALPL control circuit 710 is the main core engine of ALPL control flow to enter and exit the ALPL mode of the above and other embodiments of the application. The ALPL control circuit 710 automatically controls the MAC circuit 720, the PHY layer circuit 730, the AFE circuit 740 and the RF circuit 750 to save power consumption when in the ALPL mode. For example but not limited by, the PHY layer circuit 730 has two tables, i.e. a normal mode bandwidth table (for example but not limited by, BW320 or higher) and an ALPL mode bandwidth table (for example but not limited by, BW80). In the normal mode, under control of the ALPL control circuit 710, the PHY layer circuit 730 uses the normal mode bandwidth table; and in the ALPL mode, under control of the ALPL control circuit 710, the PHY layer circuit 730 uses the ALPL mode bandwidth table. Similarly, for example but not limited by, the RF circuit 750 has four tables, i.e. a normal mode modulation rate table (for example but not limited by, MCS11 or higher) a normal mode bandwidth table (for example but not limited by, BW320 or higher), an ALPL mode modulation rate table (for example but not limited by, MCS9). an ALPL mode bandwidth table (for example but not limited by, BW80). In the normal mode, under control of the ALPL control circuit 710, the RF layer circuit 750 uses the normal mode bandwidth table and the normal mode modulation rate table; and in the ALPL mode, under control of the ALPL control circuit 710, the RF layer circuit 750 uses the ALPL mode bandwidth table and the ALPL mode modulation rate table.

Functions and details structures of the MAC circuit 720, the PHY layer circuit 730, the AFE circuit 740 and the RF circuit 750 are not specified here.

The Wi-Fi communication circuit 700 according to one embodiment of the application performs the above Wi-Fi communication method according to one embodiment of the application.

In one embodiment of the application, the capability of ALPL is enabled and developed for improving Rx Listen power consumption (reducing Rx listen power consumption) for longer battery utilization while minimizing the impact to system performance for longer listen usages.

The foregoing mainly describes the solutions provided in the embodiments of the application from a perspective of the Wi-Fi communication method and circuit. It may be understood that, to implement the foregoing functions, the Wi-Fi communication circuit includes corresponding hardware structures and/or software modules for performing the functions. A person skilled in the art should easily be aware that, in combination with units and algorithm steps of the examples described in the embodiments disclosed in this specification, this application may be implemented in a hardware form or in a form of combining hardware with computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In one embodiment of the application, the Wi-Fi communication circuit may be divided into different function modules or blocks or sub-circuits based on the foregoing method examples. For example, each function module may be obtained through division based on each corresponding function, or two or more functions may be integrated into one processing module. The integrated module may be implemented in a form of hardware, or may be implemented in a form of a software function module. It should be noted that, in the embodiments of this application, division into modules is an example, and is merely logical function division. During actual implementation, another division manner may be used. An example in which each function module is obtained through division based on each corresponding function is used below for description.

While this document may describe many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination in some cases can be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few examples and implementations are disclosed. Variations, modifications, and enhancements to the described examples and implementations and other implementations can be made based on what is disclosed.

## Claims

1. A Wi-Fi communication method of a transceiver device, **characterized in that**:
after a predetermined idle period, switching from a first mode into a second mode, wherein the first mode having a first capability, and the second mode having a second capability different from the first capability;
in response to failure of decoding a first data packet, switching from the second mode into the first mode; and
receiving and decoding a second data packet in the first mode, wherein the first data packet is retransmitted as the second data packet.

2. The Wi-Fi communication method according to claim 1, wherein
the first capability indicates that a bandwidth is 160MHz or higher, and/or a modulation rate is Modulation and Coding Scheme 11 (MCS11) or higher, and/or a data rate is 1K Quadrature Amplitude Modulation (QAM) or higher; and
the second capability indicates a bandwidth is 80MHz, and/or a modulation rate is MCS9, and/or a data rate is 256QAM.

3. The Wi-Fi communication method according to claim 1, wherein after entering into the second mode, when a third data packet is correctly decoded and received, staying in the second mode.

4. A Wi-Fi communication method for a Wi-Fi communication circuit, **characterized in that**:
entering into a second mode from a first mode at least based on a transmission requirement being lower than a transmission requirement threshold, and based on an idle period being longer than an idle period threshold, the first mode having a first capability, and the second mode having a second capability different from the first capability; and
exiting the second mode based on a decoding result of a received data packet.

5. The Wi-Fi communication method according to claim 4, wherein entering into the second mode is further based on a received data packet being not targeted to the Wi-Fi communication circuit.

6. The Wi-Fi communication method according to claim 4, wherein the decoding result of the received data packet comprises:
a BSS (Basic Service Set) color field of the received data packet matching a network setting of the Wi-Fi communication circuit;
the received data packet being an access point (AP)-to-station (STA) condition by checking an AP-STA flag; and
a data rate being higher than 256 QAM (Quadrature Amplitude Modulation) or a bandwidth error occurs.

7. The Wi-Fi communication method according to claim 4, wherein exiting the second mode is further based on the received data packet being targeted to the Wi-Fi communication circuit.

8. The Wi-Fi communication method according to claim 7, wherein the received data packet being targeted to the Wi-Fi communication circuit is determined based on a MU-RTS (Multi-User Request to Send) frame of the received data packet sent in a bandwidth higher than the second capability.

9. A Wi-Fi communication circuit **characterized in that**:
an advanced low power listen (ALPL) control circuit (710); and
a Wi-Fi processing circuit (760) coupled to the ALPL control circuit,
wherein the ALPL control circuit is configured for:
after a predetermined idle period, switching the Wi-Fi communication circuit from a first mode into a second mode, wherein the first mode having a first capability, and the second mode having a second capability different from the first capability;
in response to failure of decoding a first data packet, switching the Wi-Fi communication circuit from the second mode into the first mode; and
receiving and decoding a second data packet in the first mode, wherein the first data packet is retransmitted as the second data packet.

10. The Wi-Fi communication circuit according to claim 9, wherein
the first capability indicates that a bandwidth is 160MHz or higher, and/or a modulation rate is Modulation and Coding Scheme 11 (MCS11) or higher, and/or a data rate is 1K Quadrature Amplitude Modulation (QAM) or higher; and
the second capability indicates a bandwidth is 80MHz, and/or a modulation rate is MCS9, and/or a data rate is 256QAM.

11. The Wi-Fi communication circuit according to claim 9, wherein the ALPL control circuit is configured for:
after entering into the second mode, when a third data packet is correctly decoded and received, controlling the Wi-Fi communication circuit staying in the second mode.

12. The Wi-Fi communication circuit according to claim 9, wherein the ALPL control circuit is configured for:
entering into a second mode from a first mode at least based on a transmission requirement being lower than a transmission requirement threshold, and based on an idle period being longer than an idle period threshold, the first mode having a first capability, and the second mode having a second capability different from the first capability; and
exiting the second mode based on a decoding result of a received data packet.

13. The Wi-Fi communication circuit according to claim 12, wherein the ALPL control circuit is configured for:
entering into the second mode further based on a received data packet being not targeted to the Wi-Fi communication circuit.

14. The Wi-Fi communication circuit according to claim 12, wherein the decoding result of the received fourth data packet comprises:
a BSS (Basic Service Set) color field of the received data packet matching a network setting of the Wi-Fi communication circuit;
the received data packet being an access point (AP)-to-station (STA) condition by checking an AP-STA flag; and
a data rate being higher than 256 QAM (Quadrature Amplitude Modulation) or a bandwidth error occurs.

15. The Wi-Fi communication circuit according to claim 12, wherein the ALPL control circuit is configured for:
exiting the second mode further based on the received data packet being targeted to the Wi-Fi communication circuit; and
determining the received data packet being targeted to the Wi-Fi communication circuit based on a MU-RTS (Multi-User Request to Send) frame of the received data packet sent in a bandwidth higher than the second capability.
